# EUROPEAN PATENT APPLICATION

(11) **EP 3 691 115 A1**
(43) Date of publication of application: **05.08.2020**
(21) Application number: 18842694.4
(22) Date of filing: 13.06.2018
(51) Int. Cl.: H02S 20/30, H02S 50/10

(54) **SUPPORT APPARATUS AND TEST METHOD FOR FLEXIBLE SOLAR CELL PERFORMANCE TEST**

(30) Priority: 30.08.2017 CN 201721101938 U
(71) Applicant: Lingfan Renewable Energy Technology (Beijing) Co., Ltd., Beijing 101407 (CN)
(72) Inventor: JIANG, Zhongqian, Fujian 362005 (CN); HUANG, Xianyi, Fujian 362005 (CN); LIU, Honggang, Fujian 362005 (CN); LIAN, Chongyan, Fujian 362005 (CN); XUE, Chaowei, Fujian 362005 (CN); HU, Pengchen, Fujian 362005 (CN); LONG, Wei, Fujian 362005 (CN)
(74) Representative: Cohausz & Florack
(86) International application number: PCT/CN2018/091132
(87) International publication number: WO 2019/041965

(57) **Abstract**

The disclosure provides a support device for performance test of a flexible solar cell and a test method. The support device includes a cell placement planar frame (3), a magnet (4) and a bus bar (5). The cell placement planar frame (3) and the bus bar (5) are both conductors, the magnet (4) is attracted on the plate surface on one side of the cell placement planar frame (3), the plate surface on the other side thereof is provided with an insulating tape. The bus bar (5) is fixed on the insulating tape under the action of magnetic adsorption of the magnet (4), and configured to press the lead-out end of an electrode II of the flexible solar cell in a range of the insulating tape. The bus bar (5) is provided with a first power source connecting line (18), and the cell placement planar frame (3) is provided with a second power source connecting line (19).

## Description

This application claims priority to Chinese Patent Application No. 201721101938.8 filed with the State Intellectual Property Office on August 30, 2017 and titled "SUPPORT DEVICE FOR PERFORMANCE TEST OF FLEXIBLE SOLAR CELL", the entire contents of which are incorporated herein by reference.

### TECHNICAL FILED

The present disclosure relates to a support device, and more particularly to a support device for performance test of a flexible solar cell and a test method.

### BACKGROUND

Flexible solar cells are one type of thin film solar cells, and have the advantages such as of advanced technology, excellent performances, low cost, and wide application. Its components can be applied to building-integrated photovoltaic (BIPV), solar power banks, solar backpacks, solar tents, solar flashlights, solar cars and even solar-powered airplanes.

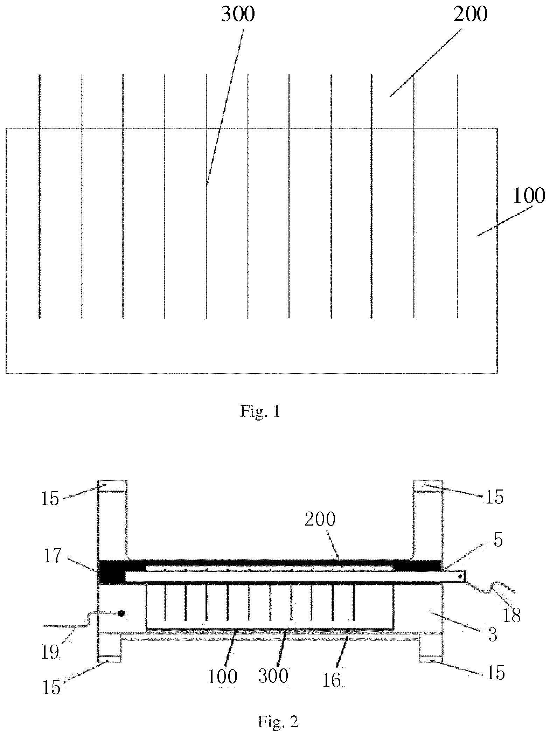

In the flexible solar cells, there is one type of cells of which the substrates are made of a conductive material that can be attracted by a magnet. The structure is shown in Fig. 1, in which a solar cell main body 100 uses the conductive material that can be attracted by the magnet as the substrate. The front surface of the substrate is coated, and the back side of the substrate is a cell electrode I. The solar cell main body 100 has the lead-out end 200 of an electrode II. The electrode II is led out from a gate electrode 300. Since the electrode I and the electrode II are respectively located on different surfaces of the solar cell main body 100, and the two electrodes are staggered vertically, a power source cannot be directly connected by upper and lower probes. Besides, such cells have large flexibility and are relatively difficult to fix when being placed. In the process of performance analysis of the cells, because there is no complete set of fixing and power source connecting devices for such cells, a large amount of time is often spent on the fixation of the cells and the connection of the two electrodes of the power source. The factors affecting the analysis of the cell performance, such as uneven surfaces of the cells and poor electrode contact, can be easily generated.

### SUMMARY

An objective of the present disclosure is to provide a support device for performance test of a flexible solar cell and a test method, to solve the technical problems in related technologies that the flexible solar cell is hard to fix and the two electrodes of a power source are hard to connect. The flexible solar cell can be effectively supported and fixed, and the test efficiency and the accuracy of a test result of the flexible solar cell are improved.

The present disclosure provides a support device for performance test of a flexible solar cell, comprising a cell placement planar frame, a magnet and a bus bar, wherein the cell placement planar frame and the bus bar are both conductors, the magnet is attracted on the plate surface on one side of the cell placement planar frame, the plate surface on the other side of the cell placement planar frame is provided with an insulating tape, the bus bar is fixed on the insulating tape under the action of magnetic adsorption of the magnet, and configured to press the lead-out end of an electrode II of the flexible solar cell in a range of the insulating tape; and the bus bar is provided with a first power source connecting line, and the cell placement planar frame is provided with a second power source connecting line.

The above-mentioned support device for performance test of a flexible solar cell, preferably, further comprises a frame body and connecting rods, wherein two connecting rods are disposed and are mounted on the frame body oppositely, and the cell placement planar frame is rotatably mounted between the two connecting rods.

In the above-mentioned support device for performance test of a flexible solar cell, preferably, the frame body comprises bottom rods, main rods and crossbeams, two bottom rods and two main rods are disposed. The main rods are disposed along a vertical direction, the bottom rods are disposed along a horizontal direction, and the bottoms of the two main rods are respectively fixedly connected to one bottom rod; and at least two crossbeams are disposed, and are fixedly disposed between the two main rods.

In the above-mentioned support device for performance test of a flexible solar cell, preferably, the opposite side surfaces of the two main rods are provided with slide rails, and the connecting rods are mounted on the slide rails by bolt components.

In the above-mentioned support device for performance test of a flexible solar cell, preferably, three crossbeams are disposed. Two of the crossbeams are disposed on the tops and bottoms of the main rods, and the rest crossbeam is disposed on the middles of the main rods.

In the above-mentioned support device for performance test of a flexible solar cell, preferably, the connecting rods are made of an insulating material, the connecting rod comprises a mounting section and an angle adjusting section, both of which are of an integral J-shaped structure, the mounting section is provided with a planar frame mounting hole, a first mounting hole and a second mounting hole from top to bottom in sequence, and the connecting rods are mounted on the slide rails by the first mounting holes, the second mounting holes and the bolt components; and the angle adjusting section is provided with an arc-shaped angle adjusting hole, the upper end of the cell placement planar frame is connected to the planar frame mounting hole, and the lower end of the cell placement planar frame is connected to the arc-shaped angle adjusting hole.

In the above-mentioned support device for performance test of a flexible solar cell, preferably, the cell placement planar frame is provided with four connecting parts, wherein two upper connecting parts are rotatably connected to the planar frame mounting holes by rotary shafts, and two lower connecting parts are connected to the arc-shaped angle adjusting holes by locking parts.

In the above-mentioned support device for performance test of a flexible solar cell, preferably, the insulating tape is an insulating adhesive tape adhered to the plate surface of the cell placement planar frame.

In the above-mentioned support device for performance test of a flexible solar cell, preferably, the lower part of the cell placement planar frame is provided with a boss, and the boss and the bus bar are located on the same side of the cell placement planar frame.

The present disclosure further provides a method for performance test of a flexible solar cell. The method is applied to the above support devices and comprises:

placing the flexible solar cell of which the substrate is made of a conductive material capable of being attracted by the magnet on the cell placement planar frame, such that the lead-out end of the electrode II of the flexible solar cell is placed on the insulating tape, and an electrode I on the back surface of a solar cell main body of the flexible solar cell is in direct contact with the cell placement planar frame;

placing the bus bar on the lead-out end of the electrode II and within a range of the insulating tape; and

connecting the first power source connecting line and the second power source connecting line to a power source respectively, to perform performance test on the flexible solar cell.

In the above mentioned method for performance test of a flexible solar cell, preferably, the method further comprises: adhering the insulating adhesive tape to the upper part of the cell placement planar frame along a transverse direction, to form the insulating tape.

In the above mentioned method for performance test of a flexible solar cell, preferably, the method further comprises: adjusting an angle of the cell placement planar frame by the connecting rods.

The present disclosure provides a support device for performance test of a flexible solar cell, comprising a cell placement planar frame, a magnet and a bus bar. The cell placement planar frame and the bus bar are both conductors, the magnet is attracted on the plate surface on one side of the cell placement planar frame, the plate surface on the other side of the cell placement planar frame is provided with an insulating tape. The bus bar is fixed on the insulating tape under the action of magnetic adsorption of the magnet, and configured to press the lead-out end of an electrode II of the flexible solar cell in a range of the insulating tape; and the bus bar is provided with a first power source connecting line, and the cell placement planar frame is provided with a second power source connecting line. In the present disclosure, a specialized support device is used to replace the manual fixing method, which greatly improve the performance test efficiency. The present disclosure adopts a cell placement planar frame to carry the flexible solar cell and the flexible solar cell is effectively fixed by a magnet and a bus bar, which not only improves the efficiency for fixing the flexible solar cell but also improves the performance test accuracy.

### BRIEF DESCRIPTION OF THE DRAWINGS

Fig. 1 is a structural diagram of a solar cell with flexible substrate;
Fig. 2 is a state diagram of an implementation of an embodiment of the present disclosure;
Fig. 3 is a structural diagram in which a magnet is attracted on the back surface of a cell placement planar frame;
Fig. 4 is a structural diagram of another embodiment of the present disclosure;
Fig. 5 is an axonometric diagram of a frame body;
Fig. 6 is an axonometric diagram of a connecting rod;
Fig. 7 is an axonometric diagram of a cell placement planar frame;
Fig. 8 is a flowchart of a method for performance test of a flexible solar cell provided in an embodiment of the present disclosure; and

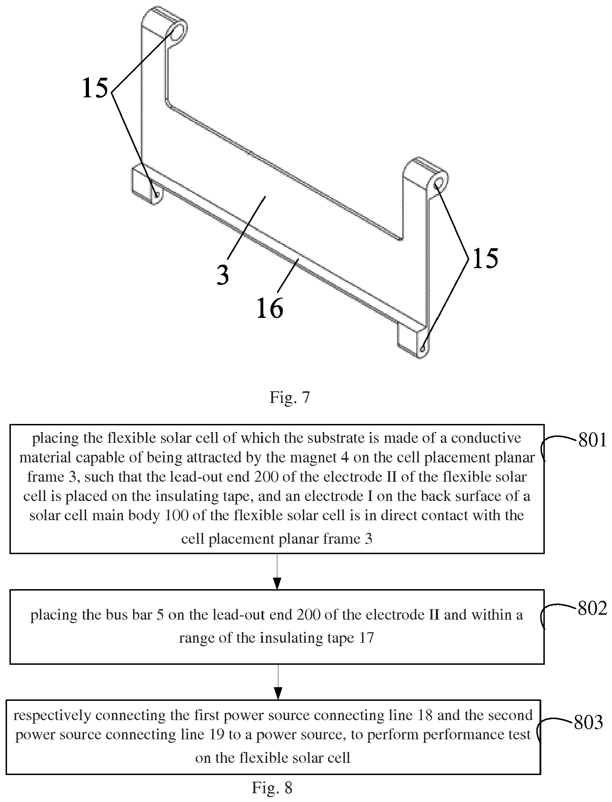

Fig. 8 is a flowchart of another method for performance test of a flexible solar cell provided in an embodiment of the present disclosure.

Description of reference numerals: 1-frame body, 2-connecting rod, 3-cell placement planar frame, 4-magnet, 5-bus bar, 6-bottom rod, 7-main rod, 8-crossbeam, 9-mounting section, 10-angle adjusting section, 11-planar frame mounting hole, 12-first mounting hole, 13-second mounting hole, 14-arc-shaped angle adjusting hole, 15-connecting part, 16-boss, 17-insulating adhesive tape, 18-first power source connecting line, 19-second power source connecting line, 100-solar cell main body, 200-lead-out end of electrode II, and 300-gate electrode.

### DETAILED DESCRIPTION

The embodiments of the present disclosure are described in detail in the following. The examples of the embodiments are shown in the accompanying drawings. The same or similar reference signs represent the same or similar elements or the elements having the same or similar functions from beginning to end. The embodiments described with reference to the accompanying drawings are illustrative, and are merely intended to explain the present disclosure rather than limiting the present disclosure.

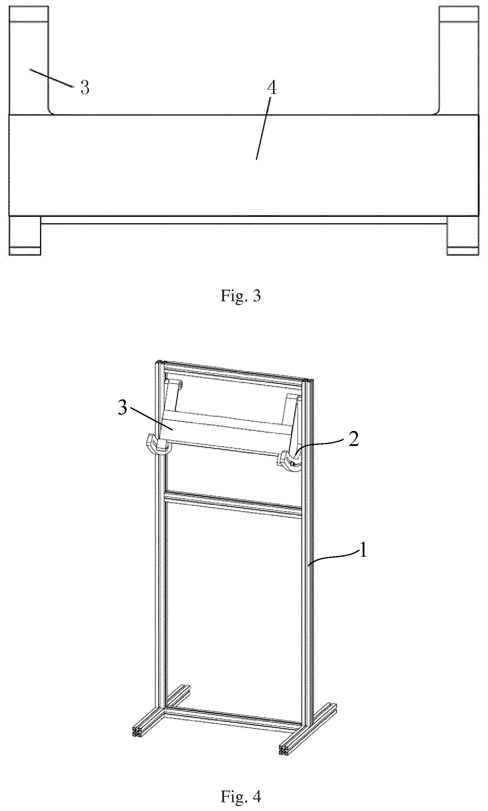

Embodiments of the present disclosure: as shown in Fig. 2 and Fig. 3, a support device for performance test of a flexible solar cell comprises a cell placement planar frame 3, a magnet 4 and a bus bar 5. The cell placement planar frame 3 and the bus bar 5 are both conductors, the magnet 4 is attracted on the plate surface on one side of the cell placement planar frame 3, the plate surface on the other side of the cell placement planar frame 3 is provided with an insulating tape, and the bus bar 5 is fixed on the insulating tape under the action of magnetic adsorption of the magnet 4, and configured to press the lead-out end of an electrode II of the flexible solar cell in a range of the insulating tape. The bus bar 5 is provided with a first power source connecting line 18, and the cell placement planar frame 3 is provided with a second power source connecting line.

Optionally, the insulating tape is an insulating adhesive tape 17 adhered to the plate surface of the cell placement planar frame 3. The insulating adhesive tape 17 and the magnet 4 are located on two opposite plate surfaces of the cell placement planar frame 3. The insulating adhesive tape 17 may be not adhered to the cell placement planar frame 3 when in an unused state. The insulating adhesive tape is adhered to the cell placement planar frame 3 when in a use state. Or the insulating adhesive tape may be insulating coating directly formed on the plate surface of the cell placement planar frame 3.

Specifically, when the flexible solar cell is applied with performance test, firstly, the insulating adhesive tape 17 is adhered to the upper part of the cell placement planar frame 3 along a transverse direction. Then the flexible solar cell of which the substrate is made of a conductive material capable of being attracted by the magnet 4 is placed on the cell placement planar frame 3. The lead-out end 200 of an electrode II is placed on the insulating adhesive tape 17. The back surface (i.e., an electrode I) of a solar cell main body 100 is in direct contact with the cell placement planar frame 3. The bus bar 5 is placed on the lead-out end 200 of the electrode II and within a range of the insulating adhesive tape 17. Since the bus bar 5 can be attracted by the magnet 4, the bus bar 5 can press the lead-out end 200 of the electrode II. The first power source connecting line 18 and the second power source connecting line 19 are then respectively connected to a power source, so as to perform performance test on the flexible solar cell.

The present disclosure makes full use of the characteristic that the flexible solar cell can be attracted by the magnet. The quick fixation of the flexible solar cell is realized by the cell placement planar frame 3 and the magnet 4. The fixation efficiency is effectively improved. Since both the cell placement planar frame 3 and the bus bar 5 are conductors, the bus bar 5 can be connected to the lead-out end 200 of each electrode II, and then connected to the power source by the first power source connecting line 18. While the cell placement planar frame 3 can be connected to each electrode I and then connected to the power source by the second power source connecting line 19. The problem of inconvenience in connection of the electrodes of the flexible solace cell is effectively solved.

In another embodiment, as shown in Fig. 4, the present disclosure further comprises a frame body 1 and connecting rods 2. Two connecting rods 2 are disposed, and are mounted on the frame body 1 oppositely. The cell placement planar frame 3 is rotatably mounted between the two connecting rods 2. It should be noted that the connecting rods 2 should have an insulating effect, and are preferably made of an insulating material. Of course, a non-insulating material may also be adopted. When the non-insulating material is adopted, the means of brushing insulating coating or sleeving an insulating sleeve on the outer part is required to endow it with the insulating effect. Slide rails are disposed on the inner sides of the connecting rods 2.

By such structural design, the angle of the cell placement planar frame 3 can be adjusted by the connecting rods 2, to meet the requirement on different angles when the flexible solar cell is applied with performance analysis.

In order to prevent the flexible solar cell from falling off from the cell placement planar frame 3 due to misoperation and avoid the damage to the cell, preferably, as shown in Fig. 7, the lower part of the cell placement planar frame 3 is provided with a boss 16. The boss 16 and the bus bar 5 are located on the same side. The boss 16 is disposed to play a role of limiting the bottom, and can effectively prevent the flexible solar cell from slipping off from the cell placement planar frame 3.

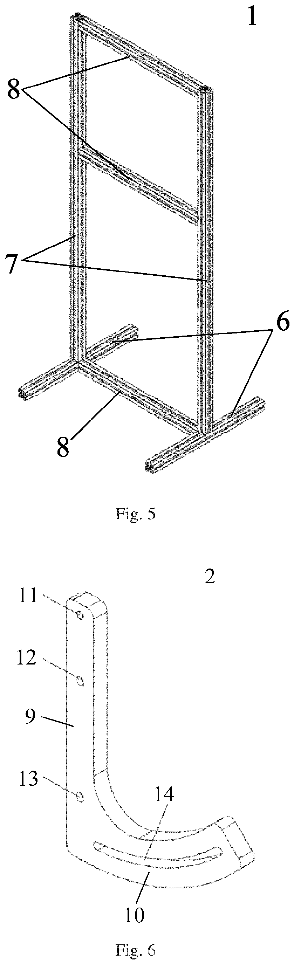

The frame body 1 is further explained in the following. As shown in Fig. 5, the frame body 1 comprises bottom rods 6, main rods 7 and crossbeams 8. Two bottom rods 6 and two main rods 7 are disposed. The main rods 7 are disposed along a vertical direction. The bottom rods 6 are disposed along a horizontal direction. The bottoms of the two main rods 7 are fixedly connected to the bottom rods 6 respectively. At least two crossbeams 8 are disposed and are fixedly disposed between the two main rods 7. Not only is the frame body 1 adopting such a structure simple in structure and low in manufacturing cost, but also the strength of the frame body can meet the use demands.

In a preferable embodiment, the opposite side surfaces (inner side surfaces) of the two main rods 7 are provided with slide rails. The connecting rods 2 are mounted on the slide rails by bolt components. Specifically, the screw cap parts on screw rods are mounted in the slide rails. The screw rods penetrate through mounting holes in the connecting rods 2 and are then fixed by nuts. It should be noted that the structure of the rails may adopt many forms. When the rails of different forms are adopted, the bolt components can be replaced with connectors capable of being structurally matched with the corresponding rails. Three crossbeams 8 are disposed preferably. Two of the crossbeams 8 are disposed on the tops and bottoms of the main rods 7, and the rest crossbeam 8 is disposed on the middles or middle upper parts of the main rods 7. By disposing the slide rails, the positions of the connecting rods 2 can be adjusted between the two upper crossbeams 8 along the rails, thereby realizing the adjustment on the flexible solar cell in the vertical direction.

As shown in Fig. 6, preferably, the connecting rods 2 are made of an insulating material. The connecting rod 2 comprises a mounting section 9 and an angle adjusting section 10, both of which are of an integral J-shaped structure. The mounting section 9 is provided with a planar frame mounting hole 11, a first mounting hole 12 and a second mounting hole 13 from top to bottom in sequence. The connecting rods 2 are mounted on the slide rails by the first mounting holes 12, the second mounting holes 13 and the bolt components. The angle adjusting section 10 is provided with an arc-shaped angle adjusting hole 14. The upper end of the cell placement planar frame 3 is connected to the planar frame mounting hole 11. The lower end of the cell placement planar frame is connected to the arc-shaped angle adjusting hole 14. The cell placement planar frame 3 is provided with four connecting parts 15 thereon. Two upper connecting parts 15 are rotatably connected to the planar frame mounting holes 11 by rotary shafts. Two lower connecting parts 15 are connected to the arc-shaped angle adjusting holes 14 by locking parts.

When the angle of the cell placement planar frame 3 needs to be adjusted, only the locking parts on the two lower connecting parts 15 need to be screwed off. Then the cell placement planar frame 3 is rotated to a proper angle. Afterwards, the locking parts are screwed on. By disposing the angle adjusting structures, when the performances of the flexible solar cell are tested, the requirement on different angles can be met, such that the measured result is more accurate.

Fig. 8 shows a flowchart of a method for performance test of a flexible solar cell provided in an embodiment of the present disclosure. The method may be applied to the support device shown in any of Figs. 2-7. The method includes:

placing the flexible solar cell of which the substrate is made of a conductive material capable of being attracted by the magnet 4 on the cell placement planar frame 3, such that the lead-out end 200 of the electrode II of the flexible solar cell is placed on the insulating tape, and an electrode I on the back surface of a solar cell main body 100 of the flexible solar cell is in direct contact with the cell placement planar frame 3 in step 801;

placing the bus bar 5 on the lead-out end 200 of the electrode II and within a range of the insulating adhesive tape 17 in step 802; and

respectively connecting the first power source connecting line 18 and the second power source connecting line 19 to a power source, to perform performance test on the flexible solar cell in step 803.

In conclusion, in the method for performance test provided by the present disclosure, the flexible solar cell is carried by the cell placement planar frame. The effective fixation of the flexible solar cell is realized by the magnet and the bus bar. Not only is the fixing efficiency of the flexible solar cell improved, but also the accuracy of the performance test of the flexible solar cell is effectively improved.

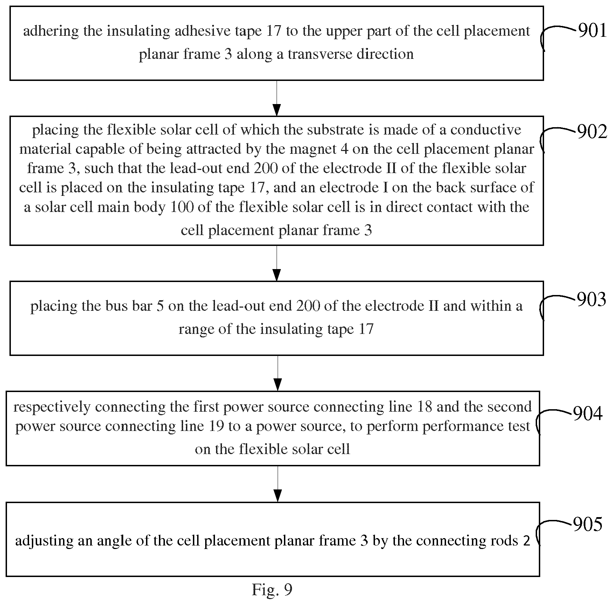

Fig. 9 shows a flowchart of a method for performance test of a flexible solar cell provided in another embodiment of the present disclosure. The method may be applied to the support device shown in any of Figs. 2-7. The insulating tape in the device may be the insulating adhesive tape 17 attached to the cell placement planar frame. The method includes:

adhering the insulating adhesive tape 17 to the upper part of the cell placement planar frame 3 along a transverse direction in step 901;

placing the flexible solar cell of which the substrate is made of a conductive material capable of being attracted by the magnet 4 on the cell placement planar frame 3, such that the lead-out end 200 of the electrode II of the flexible solar cell is placed on the insulating adhesive tape 17, and an electrode I on the back surface of a solar cell main body 100 of the flexible solar cell is in direct contact with the cell placement planar frame 3 in step 902;

placing the bus bar 5 on the lead-out end 200 of the electrode II and within a range of the insulating adhesive tape 17 in step 903;

respectively connecting the first power source connecting line 18 and the second power source connecting line 19 to a power source, to perform performance test on the flexible solar cell in step 904; and

adjusting an angle of the cell placement planar frame 3 by the connecting rods 2 in step 905.

Optionally, when the support device is disposed on the connecting rod 2 shown in Fig. 4, the angle of the cell placement planar frame 3 may also be adjusted by the connecting rod 2.

When the angle of the cell placement planar frame 3 needs to be adjusted, only the locking parts on the two lower connecting parts 15 need to be screwed off. Then the cell placement planar frame 3 is rotated to a proper angle. Afterwards, the locking parts are screwed on.

According to the present embodiment, the requirements on different angles can be met, by setting the angle adjusting structures, when the performances of the flexible solar cell are tested such that the measured result is more accurate.

The structures, characteristics and effects of the present disclosure are explained in detail according to the embodiments as shown in the drawings. The forgoing is merely preferred embodiments of the present disclosure. However, the implementing scope of the present disclosure is not limited by the drawings. All changes made according to the conception of the present disclosure or the equivalent embodiments with equivalent modifications should still belong to the protective scope of the present disclosure when not going beyond the spirit covered by the description and the drawings.

## Claims

1. A support device for performance test of a flexible solar cell, **characterized by** comprising a cell placement planar frame (3), a magnet (4) and a bus bar (5), wherein the cell placement planar frame (3) and the bus bar (5) are both conductors, the magnet (4) is attracted on the plate surface on one side of the cell placement planar frame (3), the plate surface on the other side of the cell placement planar frame (3) is provided with an insulating tape, the bus bar (5) is fixed on the insulating tape under the action of magnetic adsorption of the magnet (4), and configured to press the lead-out end of an electrode II of the flexible solar cell in a range of the insulating tape; and the bus bar (5) is provided with a first power source connecting line (18), and the cell placement planar frame (3) is provided with a second power source connecting line (19).

2. The support device for performance test of a flexible solar cell according to claim 1, **characterized by** further comprising a frame body (1) and connecting rods (2), wherein two connecting rods (2) are disposed and are mounted on the frame body (1) oppositely, and the cell placement planar frame (3) is rotatably mounted between the two connecting rods (2).

3. The support device for performance test of a flexible solar cell according to claim 2, **characterized in that** the frame body (1) comprises bottom rods (6), main rods (7) and crossbeams (8), two bottom rods (6) and two main rods (7) are disposed, the main rods (7) are disposed along a vertical direction, the bottom rods (6) are disposed along a horizontal direction, and the bottoms of the two main rods (7) are respectively fixedly connected to one bottom rod (6); and at least two crossbeams (8) are disposed, and are fixedly disposed between the two main rods (7).

4. The support device for performance test of a flexible solar cell according to claim 3, **characterized in that** the opposite side surfaces of the two main rods (7) are provided with slide rails, and the connecting rods (2) are mounted on the slide rails by bolt components.

5. The support device for performance test of a flexible solar cell according to claim 3, **characterized in that** three crossbeams (8) are disposed, two of the crossbeams (8) are disposed on the tops and bottoms of the main rods (7), and the rest crossbeam (8) is disposed on the middles of the main rods (7).

6. The support device for performance test of a flexible solar cell according to claim 4, **characterized in that** the connecting rods (2) are made of an insulating material, the connecting rods (2) comprise a mounting section (9) and an angle adjusting section (10), both of which are of an integral J-shaped structure, the mounting section (9) is provided with a planar frame mounting hole (11), a first mounting hole (12) and a second mounting hole (13) from top to bottom in sequence, and the connecting rods (2) are mounted on the slide rails by the first mounting holes (12), the second mounting holes (13) and the bolt components; and the angle adjusting section (10) is provided with an arc-shaped angle adjusting hole (14), the upper end of the cell placement planar frame (3) is connected to the planar frame mounting hole (11), and the lower end of the cell placement planar frame is connected to the arc-shaped angle adjusting hole (14).

7. The support device for performance test of a flexible solar cell according to claim 6, **characterized in that** the cell placement planar frame (3) is provided with four connecting parts (15), in which two upper connecting parts (15) are rotatably connected to the planar frame mounting holes (11) by rotary shafts, and two lower connecting parts (15) are connected to the arc-shaped angle adjusting holes (14) by locking parts.

8. The support device for performance test of a flexible solar cell according to any one of claims 1 to 7, **characterized in that** the insulating tape is an insulating adhesive tape (17) adhered to the plate surface of the cell placement planar frame (3).

9. The support device for performance test of a flexible solar cell according to claim 1 or 6 or 7, **characterized in that** the lower part of the cell placement planar frame (3) is provided with a boss (16), and the boss (16) and the bus bar (5) are located on the same side of the cell placement planar frame (3).

10. A method for performance test of a flexible solar cell, **characterized in that** the method is applied to the support device according to any one of claims 1 to 9, and the method comprises:
placing the flexible solar cell of which the substrate is made of a conductive material capable of being attracted by the magnet (4) on the cell placement planar frame (3), such that the lead-out end (200) of the electrode II of the flexible solar cell is placed on the insulating tape, and an electrode I on the back surface of a solar cell main body (100) of the flexible solar cell is in direct contact with the cell placement planar frame (3);
placing the bus bar (5) on the lead-out end (200) of the electrode II and within a range of the insulating tape; and
connecting the first power source connecting line (18) and the second power source connecting line (19) to a power source respectively, to perform performance test on the flexible solar cell.

11. The method for performance test of a flexible solar cell according to claim 10, **characterized in that** the method further comprises:
adhering the insulating adhesive tape (17) to the upper part of the cell placement planar frame (3) along a transverse direction, to form the insulating tape.

12. The method for performance test of a flexible solar cell according to claim 10, **characterized in that** the support device is the device according to any one of claims 2 to 9, and the method further comprises:
adjusting an angle of the cell placement planar frame (3) by the connecting rods (2).
